# EUROPEAN PATENT SPECIFICATION

(11) **EP 4 003 621 B1**
(45) Date of publication and mention of the grant of the patent: **04.12.2024**
(21) Application number: 20745186.5
(22) Date of filing: 23.07.2020
(51) Int. Cl.: B21H 8/00, B21B 1/22, B21B 27/00, B23K 26/352

(54) **METAL SUBSTRATE PROVIDED WITH SURFACE TEXTURE AND METHOD FOR APPLYING SUCH TEXTURES ON METAL SUBSTRATES**
METALLISCHES SUBSTRAT MIT OBERFLÄCHENTEXTUR UND VERFAHREN ZUM AUFBRINGEN SOLCHER TEXTUREN AUF METALLISCHE SUBSTRATE
SUBSTRAT MÉTALLIQUE POURVU D'UNE TEXTURE DE SURFACE ET PROCÉDÉ D'APPLICATION DE CES TEXTURES SUR DES SUBSTRATS MÉTALLIQUES

(30) Priority: 25.07.2019 EP 19188400
(43) Date of publication of application: 01.06.2022
(73) Proprietor: Tata Steel Nederland Technology B.V., 1951 JZ Velsen-Noord (NL)
(72) Inventor: BAART, Pieter, 1970 CA IJmuiden (NL); VAN BEECK, Jeroen, 1970 CA IJmuiden (NL); TEN HORN, Carel Hendrik Laurens Jan, 1970 CA IJmuiden (NL)
(74) Representative: Group Intellectual Property Services
(86) International application number: PCT/EP2020/070819
(87) International publication number: WO 2021/013938

(56) References cited:
- WO-A1-2014/104459
- US-A- 5 358 794

## Description

### Field of the invention

The invention relates to a metal substrate provided with surface texture, wherein the surface texture comprises a plurality of depressions for simultaneously providing good press performance and waviness, as well as a method to apply such surface textures on a metal substrate.

### Background of the invention

In the finishing of (coated) metal strip, a metal strip is subjected to levelling and/or temper rolling. With levelling the shape and form of the strip are controlled and with temper rolling the mechanical properties of the metal strip are improved by lengthening of the strip. Also the surface quality of the strip is improved as far as it concerns appearance, surface texture and surface function(ality). With the temper rolling step a texture may be transferred to the surface of the strip from the work rolls to get a certain function. The texturing of the metal strip is done to the requirements of the end user, for instance end users in the automotive industry.

An important functional aspect of the surface of the metal substrate is related to press performance. In metal sheet forming, transfer of material from (metallic coated) metal sheet onto press tools and subsequent material accumulation of the material on the press tools, can initiate galling in the (metallic coated) metal sheet during forming. This disrupts a good visual appearance of the final part, and may lead to rejection of the part as well as expensive cleaning of press tools. During forming of the product the surface of the substrate slides along the press tools where high contact friction and poor lubrication may result in surface damage such as galling of the substrate and in case of an applied zinc coating, zinc pollution of the press tools. To reduce these effects, the current solution is to use extremely smooth tool surfaces and rather rough strip surfaces as well as applying oil for lubrication. One hypothesis is that high roughness on the strip helps to capture oil for good lubrication properties. This strategy of improving press performance by increasing strip roughness in critical forming conditions has proven to work in press shops. However, it also has a negative effect on the painting process and appearance as high roughness generally increases waviness which is detrimental for the paint appearance.

A metal substrate according to the preamble of claim 1 is e.g. known from US 5 358 794 A.

Therefore, it is an objective of the invention to provide a metal substrate that simultaneously provides good galling performance and paint appearance. It is another objective of the invention to provide a method to obtain such a metal substrate.

In a first aspect according to the invention there is provided a metal substrate with a surface texture, wherein the surface texture comprises a plurality of depressions, wherein each triplet of closest neighbouring depressions is spaced apart by a circle with a radius r, measured from the edge of the depressions, and wherein the arithmetic mean radius rₘₑₐₙ is at most 20 µm and wherein the material area fraction is at least 30%..

By limiting the rₘₑₐₙ of each triplet of closest neighbouring depressions, it was observed that the press performance of the metal substrate increased and galling was reduced while the waviness still indicated a good paint appearance. If the rₘₑₐₙ exceeds 20 µm, the press performance deteriorates, and significant higher amount of tool pollution and galling is observed. The lower limit of rₘₑₐₙ is not particularly limited and is determined by the preparation of the surface texture. If the depressions in the surface texture are obtained by laser ablation, a rₘₑₐₙ of 1 µm would be a suitable lower limit, whereas if the depression are obtained by imprinting, for example via a textured work roll, a rₘₑₐₙ of 3 µm would be feasible.

The material area fraction (MAF) is at least 30%. The material area fraction is representative for the contact area during forming. A higher material area fraction will result in a lower local contact pressure. The load can be carried by the high height area's or peaks of the surface texture and by a hydrostatic pressure generated in the lubricant in the depressions of the surface texture. A material area fraction below 30% will likely generate high local contact pressures and therefore result in surface defects. Preferably the material area fraction is at least 40%, more preferably at least 60%, most preferably at least 80%. The material area fraction can be calculated from a height profile, for example obtained by confocal microscopy.

The metal substrate may have a deterministic, pseudo-deterministic or stochastic surface. When applying the surface texture, the rₘₑₐₙ can be set to be at most 20 µm, in particular for deterministic and pseudo-deterministic surface textures. It should be noted that the surface texture also can be analysed afterwards. The circles can be mathematically fitted between the depressions and the circles are not part of the surface texture itself. The sum of the radius of all fitted circles is then divided by the amount of fitted circles to obtain the arithmetic mean radius rₐ. The circles can be fitted on an image of the surface, preferably a 3D measured height map, using image processing software such as matlab. The arithmetic mean radius rₘₑₐₙ provides an indication of the average size of the land areas. Reducing the arithmetic mean radius rₘₑₐₙ of the circular space between each triplet of closest neighbouring depressions will on average result in smaller land areas. As these land areas will be under high load during press conditions, they are most prone to be damaged. Without wishing to be bound to theory, it is believed that limiting the arithmetic mean radius rₘₑₐₙ to 20 µm ensures that the damaged land areas will generate small wear particles, resulting in less tool pollution and galling, and hence, a better press performance.

The terms depression, recesses or dimples are used interchangeably and comprise depressions, recesses or dimples of any shape.

The surface texture which has the objective to reduce galling may be present over the full width and length of the metal substrate. Alternatively, only specific parts of the metal substrate, such as a blank or strip, comprises the surface texture while the remainder of the surface has another surface texture with another objective, depending on the final specifications of the product. For example, if the formation of the final part is known, and the forming substrate-tool contact stresses are limited to specific areas, the metal substrate may comprise the surface texture only on these corresponding areas.

In a preferred embodiment, the arithmetic mean radius rₘₑₐₙ is most 15 µm, more preferably at most 10 µm or even more preferably 5 µm. By limiting the arithmetic mean radius, the average size of the wear particles will likely become smaller and the press performance is even further increased.

In a preferred embodiment at least 90% of the fitted circles between a triplet of closest neighbouring depressions have a radius r of at most 30 µm. Depending on the surface texture, the distribution of depression may vary. A stochastic or pseudo-deterministic structure will have a larger statistical dispersion for the radius r between each triplet of closest neighbouring depressions than a deterministic structure. It was observed that at least 90% of the circles between a triplet of closest neighbouring depressions should have a radius r of at most 30 µm, in order to reduce unwanted tool pollution and subsequent galling. Therefore, the percentage of fitted circles between a triplet of closest neighbouring depressions with a radius of at most 30 µm, preferably at most 25 µm, more preferably at most 20 µm is at least 90%, preferably at least 95%, more preferably at least 97%, even more preferably at least 98%, most preferably at least 99.5%.

In a preferred embodiment the surface texture is deterministic or pseudo deterministic. A deterministic or pseudo deterministic surface texture will result in a more defined surface texture, thereby decreasing the chance of large land areas and galling. In addition, a (pseudo) deterministic surface texture will have a lower waviness, thereby giving a better paint appearance in comparison to typical stochastic surface textures. The texture patterns can be applied in a fully deterministic manner resulting in perfect arrays of depressions, that is with the dimples in lines at an angle to each other, for instance in a cubic or hexagonal array. Such texture will have excellent waviness and good press performance. However, this may result in very visible patterns in a painted product when viewed at specific angles, for example a Moiré pattern. For that reason the depressions may also be provided in a pseudo deterministic manner which prevents that these kind of unwanted interference patterns are seen when viewed at specific angles. Pseudo deterministic includes, but is not limited to, a spatial distribution which is based on a hexagonal array but with a controlled displacement of each surface feature in the hexagonal array such that autocorrelation is reduced. That means that a certain spatial distribution of surface features in an evaluation window is unique and no equal spatial distribution of surface features is found when moving the evaluation window with a certain distance or angle. Also apparently random generation of surfaces but with certain boundary conditions taken into account, like not allowing surface featured to overlap, is included as a so called pseudo deterministic spatial distribution.

In a preferred embodiment the depressions have a diameter in a range of 25 - 120 µm, preferably in a range of 25 -70 µm, most preferably in a range of 30 - 45 µm. A surface texture with the diameter of the depressions in this range will be beneficial for oiling and capturing the wear particles to further reduce tool pollution and to avoid waviness increase by texturing. In addition the paint appearance will be good in this range. Below 25 µm the preparation of the depressions will become challenging. In the case of making surface texture with a rolling process, the roughness transfer becomes less robust. In the case of making the surface with a laser, the process will be less efficient and robust due to high focussing of the laser beam. In addition, the depression will likely be too small to efficiently capture wear particles. Above 120 µm the length scale of the surface texture becomes too course and the waviness increases such that the paint appearance will likely be worse.

In a preferred embodiment the depressions have a depth in a range of 2 -12 µm, preferably in a range of 2 - 5 µm. A surface texture with the depth of the depressions in this range will be beneficial for oiling and capturing the wear particles to further reduce tool pollution and to avoid waviness increase due to the applied surface texture. Below 2 µm the roughness of the surface texture will become insufficient, negatively impacting the lubrication storage effect. Above 12 µm the depressions may pierce the upper layer completely. This could lead for example to corrosion issues in case the metal substrate is zinc coated steel.

In a preferred embodiment the depressions have a density in a range of between 100 to 10000 per square millimetre. As the metal substrate will already have a texture pattern with a respective waviness and roughness obtained from production, for example from the work rolls in the temper mill, the applied texture pattern will typically result in an alteration of the pattern and an increase in waviness. This additional waviness should preferably be minimized for paint performance. The additional waviness is defined as the additional waviness introduced by the surface texture of the invention in comparison to the waviness which would have been realized with a smooth roll which had a ground surface with a roughness Ra < 1.5 µm. Preferably, the additional waviness is below 0.1 µm, more preferably below 0.05 µm in order to obtain a good paint performance. In order to minimize the additional waviness the dimple density is at least 100 dimples per square millimetre, more preferably at least 150 dimples per square millimetre, most preferably at least 180 dimples per square millimetre. The higher density is limited by the method of texturing, for example a density of 10000 dimples per square millimetre is feasible with ultrafine laser texturing, whereas imprinting may be limited to a density of 600 dimples per square millimetre.

In a preferred embodiment, the texture pattern has a high closed void volume. For good forming properties, the closed void volume should preferably be at least 600 mm³/m², more preferably at least 800 mm³/m² and most preferably at least 1000 mm³/m². Without wishing to be bound by theory, it is believed that such closed void volumes are preferred as this corresponds to a texture pattern which has dimples which are not inter-connected. The load can be carried by the high height area's or peaks and by a hydrostatic pressure generated in the lubricant in the closed dimples. Dimples which are interconnected to dimples outside the loading area will likely generate a limited hydrostatic pressure and therefore do not contribute to the load carrying capacity as much. This integrated volume of the dimples is referred to as the closed void volume which is a known parameter by the expert in the field.

In a preferred embodiment, the texture pattern has a waviness (Wsa) of at most 0.3 µm to obtain optimal paint performance. Preferably, the Wsa is at most 0.25 µm, more preferably 0.20 µm. Wsa is measured according to SEP1941

In a preferred embodiment, the texture pattern has a roughness (Ra) in a range of 0.2 µm to 3 µm, more preferably in the range of 0.5 µm to 2 µm. A metal substrate according to the invention with a roughness in this range will result in good press performance and good paint adherence while maintaining a good visual appearance. A roughness below 0.2 µm will result in bad press performance, as the grip will be too low and the oil typically used during press will not be distributed properly. However, if the roughness exceeds 3 µm a low waviness cannot be obtained and the paint appearance gets worse. Roughness Ra is measured according to ISO 4287 or EN10091. It should be noted that although Ra is a commonly used parameter to characterize steel strip surfaces it provides no detail about the actual surface nor detailed surface properties.

In a further preferred embodiment, the texture pattern has a peak count (RPc) in a range of 30 - 190 per centimetre to obtain a better paint adherence and smoother paint surfaces with better reflection of images.. Preferably the peak count is in a range of 75- 160 per centimetre, more preferably 75 - 110 per centimetre. RPc is a measure for the spacing of peaks (EN10094)

In a preferred embodiment the metal substrate is a blank or a strip. The metal substrate is preferably a blank or a strip from which blanks can be cut wherein each blank may have its own reference points. In the latter case the reference points are used to trigger a cutting device to cut the strip into blanks of predefined sizes. The metal could in principle be any metal, but in most cases will be steel, which for automotive purposes comprises high strength steels for instance for parts such as A, B, C, (D) pillars, and also softer better formable steels for outer panels.

In a preferred embodiment the metal substrate comprises a metallic coating layer. In case of a steel strip or blank the material will typically be provided with a metallic coating to prevent corrosion of the substrate. In most cases such a metallic coating is provided on the metal substrate before applying a texture pattern. However, when very thin coatings are applied, for instance by means of PVD, the texture patterns may be applied before applying the coating. Metallic coatings comprise Zn coatings and Zn alloy coatings such as ZnAI, ZnMg, ZnAlMg coatings, Cr and Cr alloy coatings, Sn and Sn alloy coatings.

In a second aspect according to the invention a method to obtain a coated metal substrate according to claim 1-11, comprising the steps of
a. Providing a metal substrate
b. Optionally temper rolling the metal substrate
c. Providing a surface texture as defined in claims 1-11 by a texturing means

In a first step the metal substrate is provided. The metal substrate can be either coated, or uncoated, and may be provided as a strip or sheet, for example a coiled steel strip. Optionally, the metal substrate may be temper rolled in a second step to obtain an initial low roughness of the strip. Preferably, the metal substrate is temper rolled to a roughness to an arithmetic mean height Ra < 1.2 µm, more preferably to Ra < 0.9 µm. Such roughness will make the metal substrate especially suitable for automotive purposes. Finally a surface texture will be provided to the metal substrate by a texturing means wherein the surface texture comprises a plurality of depressions, wherein each triplet of closest neighbouring depressions is spaced apart by a circle with a radius r, measured from the edge of the depressions, and wherein the arithmetic mean radius rₘₑₐₙ is at most 20 µm. It is also possible to temper roll the metal substrate during the same step the surface texture is applied, for example if the surface texture is provided by a texturing means such as a temper mill.

In a preferred embodiment, the texturing means may be laser ablation which results in a pattern of depressions in the metal substrate or by a textured work roll, which imprints the surface texture on the metal substrate.

A product either has one side or both sides that have to meet high appearance standards, but in most cases as for instance with products for the automotive industry there is only one side that has to fulfil the highest appearance standards. The opposite side is covered and will normally not be visible in which case appearance is far less important. However, the tribological properties and press performance are equally important on both sides. Accordingly it is provided that only one side of the metal substrate is provided with texture patterns or wherein different texture patterns and/or different areas are provided with texture patterns on opposite sides of the metal substrate. With a texture pattern applied according the method on only one side, for example using laser ablation, the other side will still have a texture resulting from the temper rolling of the metal substrate.

The invention will be further explained on hand of the example shown in the drawings and experimental results.
FIG. 1: Top view of metal substrate showing surface texture patterns according to the prior art and the invention.
FIG. 2:A Schematic representation of a surface texture with a fitted circle between three neighbouring depressions with radius r for a stochastic (s), pseudo-deterministic (p) and deterministic (d) surface.

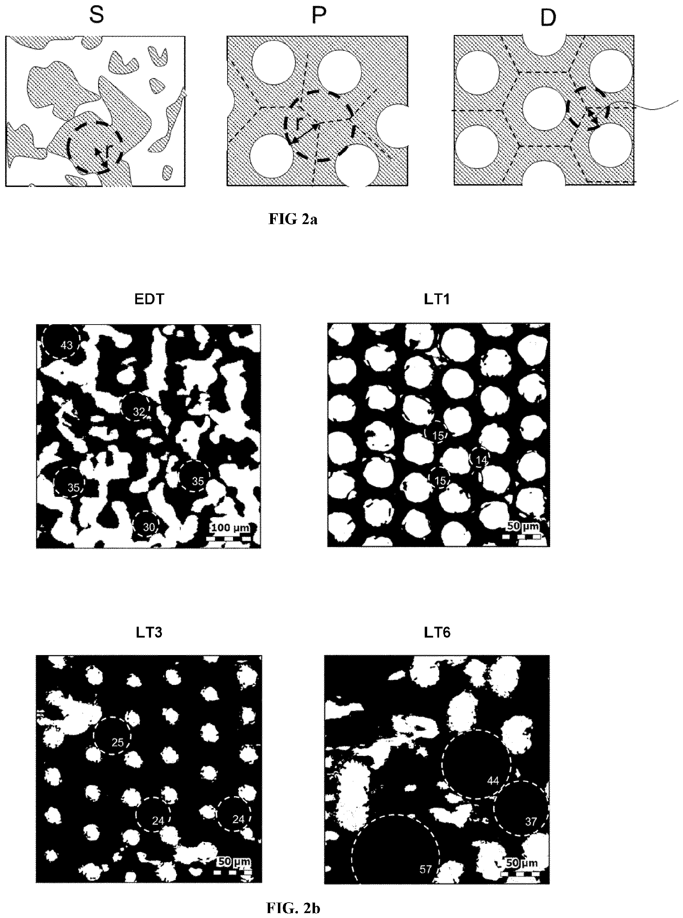

FIG. 2.B Image processing data of the tested samples according to the prior art (EDT) , the invention (LT1) and comparative samples (LT3, LT6) at a projected area at 0.7 µm²/µm³.

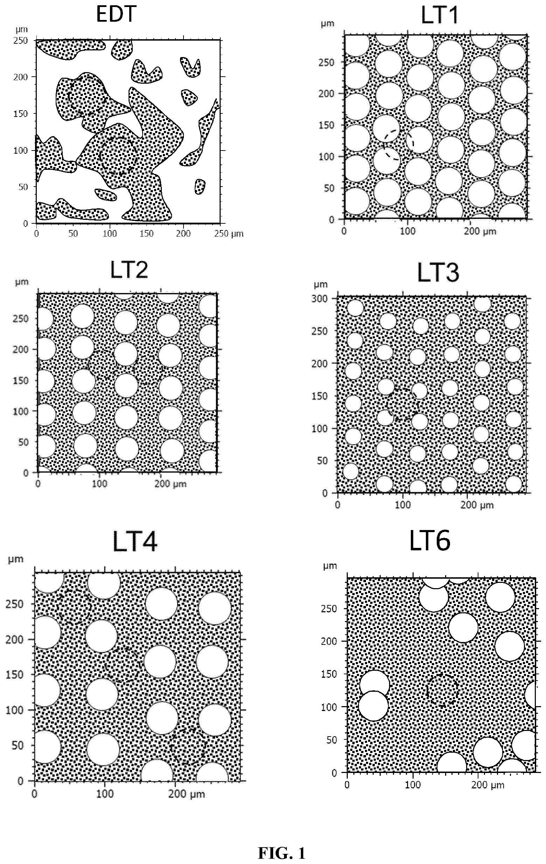

FIG. 1 shows a top view of metal substrates comprising typical texture patterns according to the prior art (EDT), according to the invention (LT1) and according to comparative samples (LT2 - LT4). A circle with a diameter of 50 µm is plotted on top as an indication of the size of the land areas. LT1-LT4 are pseudo-deterministic as the columns in the initial square array are all shifted in vertical direction. LT6, which is another comparative example is generated by randomly applying depressions. From FIG 1, it can be observed that a surface texture with a smaller rₘₑₐₙ such as LT1 results in smaller land areas, which in turn results in better press performance.

The samples shown in FIG. 1 were prepared as follows: a standard steel sheet was produced and finished with hot rolling and cold rolling as known to a person skilled in the art, after cold rolling the sheet was annealed and hot dip galvanized with a zinc alloy and finished by temper rolling. For the laser textured examples, the steel sheet was smooth skin passed to a roughness Ra < 0.5 µm and a texture pattern was applied by laser as described in WO20217125497. Pseudo-deterministic textures were prepared with laser texturing. An additional sample with a stochastic surface (EDT) texture was prepared with a conventional rolling process using EDT textured work rolls. As an additional comparative example a non-skin passed steel sheet directly obtained from the zinc bath before temper rolling was included (NSP).

All samples were characterized by confocal microscopy resulting in a 3-dimensional height map to determine rₘₑₐₙ, % of r above 30 µm and MAF. The measurement area had a dimension of 2x2 mm² to ensure a representative evaluation of the stochastic and pseudo-deterministic surface textures. The measured height profile was filtered according to ISO 16610-61 with a cut-off of 2.5×2.5µm² to remove measurement noise. Subsequently a cross section in the horizontal plane is selected at a height where the material volume above the cross section is 0.7µm³/µm². The cross section is referred to as projected area, indicating at which locations contact between the sample material and tool is to be expected, called high area and indicating locations where no contact between the sample and tool is to be expected, called depressions. High areas, corresponding to the material area fraction (MAF), are shown in black and depressions in white in FIG. 2. Further analysis was done by fitting circles in the projected area; where a circle is defined by the three nearest edges of a local high area, corresponding to the edge of the depression. The radius r of the largest circle in a local high area is shown in FIG.2 as a characteristic measure for the dimension of the local high area. It was found that for conventional surfaces, such as comparative example EDT, the average characteristic radius rₘₑₐₙ is above 30 µm. The inventive surfaces have been designed such that the rₘₑₐₙ < 20 µm, which was confirmed by the analysis of the confocal microscopy.

All samples were tested to evaluate tribological performance of surface texture at typical forming conditions according to multi frottement test, as well known to a person skilled in the art. A 50mm wide strip is clamped between a polished flat tool and a polished cylindrical tool at a load (Fn) of 5 kN, resulting in an average contact pressure of 500 MPa, and the strip is pulled to travel for a sliding distance of 50mm at a speed of 20 mm/min through the tools. As lubrication 1 g/m² Zeller & Gmelin PL61 was applied. Six passes for each sample were performed. The appearance of the steel strip was analysed after every pass and the zinc built up on the tool was analysed after six passes.

It can be observed from the table that the samples according to the invention have significantly less galling and tool pollution in comparison with the comparative samples, while maintaining a good to excellent waviness. The inspection of the metal substrate surface and tool showed significant less galling and tool pollution for the inventive samples. In addition, it was observed that the inventive samples showed a lower friction build-up (COF).

LT1, having the lowest rₘₑₐₙ (<20 µm) gave the best results and showed no galling in any of the 6 passes. LT4, not according to the invention provided satisfiable results whereas NSP, EDT and LT6, having a rₘₑₐₙ outside the scope of the invention, already showed galling after three passes and significantly polluted the tool.

Hence by applying a surface texture according to the invention a product with good waviness and press forming properties can be obtained.

| | | Depression dimensions | | | | Surface characteristics | | | | | | Press Performance | |
|---|---|---|---|---|---|---|---|---|---|---|---|---|---|
| | type | diameter [µm] | depth [µm] | density [mm⁻²] | centre distance | Ra [µm] | RPc [cm⁻¹] | Wsa [µm] | rₘₑₐₙ [µm] | %r> 30 µm | MAF [%] | n* | Tool Pollution |
| NSP | S | n.a. | n.a. | n.a. | n.a. | 0.49 | 13 | 0.46 | > 30 | >10 | - | 1 | -- |
| EDT | S | n.a. | n.a. | n.a. | n.a. | 0.97 | 93 | 0.20 | > 30 | >10 | 58 | 3 | +/- |
| LT1 | P | 41 | 4.4 | 340 | 50 | 1.46 | 146 | 0.23 | < 30 | < 10 | 52 | 6 | ++ |
| LT2 | P | 37 | 3.6 | 340 | 50 | 0.86 | 71 | 0.23 | < 30 | < 10 | 77 | 5 | ++ |
| LT3 | P | 21 | 3.5 | 400 | 50 | 0.6 | 59 | 0.19 | < 30 | < 10 | 82 | 5 | ++ |
| LT4 | P | 46 | 4.6 | 160 | 79.1 | 0.79 | 69 | 0.25 | < 30 | < 10 | 73 | 4 | + |
| LT6 | S | 44 | 4.7 | 160 | 79.1 | 0.9 | 59 | 0.24 | > 30 | >10 | 76 | 3 | +/- |

| | | | | | | | | | | | | | |
|---|---|---|---|---|---|---|---|---|---|---|---|---|---|
| type S = Stochastic, P = Pseudo deterministic n: number of passes without galling. | | | | | | | | | | | | | |

## Claims

1. A metal substrate with a surface texture, wherein the surface texture comprises a plurality of depressions, **characterised in that** each triplet of closest neighbouring depressions is spaced apart by a circle with a radius r, measured from the edge of the depressions, and wherein the arithmetic mean radius rₘₑₐₙ is at most 20 µm and wherein the material area fraction is at least 30%.

2. The metal substrate according to claim 1, wherein at least 90% of the circles between a triplet of closest neighbouring depressions have a radius r of at most 30 µm.

3. The metal substrate according to claim 1 or 2, wherein the surface texture is deterministic or pseudo deterministic.

4. The metal substrate according to any of the previous claims, wherein the depressions have a diameter in a range of 25 - 120 µm.

5. The metal substrate according to any of the previous claims, wherein the depressions have a depth in a range of 2 - 12 µm, preferably in a range of 2 - 5 µm.

6. The metal substrate according to any of the previous claims, wherein the depressions have a density in a range between 100 to 10000 per square millimetre, preferably 180 to 600 per square mm.

7. The metal substrate according to any of the previous claims, wherein the Wsa is ≤ 0.3 µm measured according to SEP1941.

8. The metal substrate according to any of the previous claims, wherein the arithmetic mean height Ra is in a range of 0.5 µm to 2 µm measured according to ISO 4287 or EN10091.

9. The metal substrate according to any of the previous claims, wherein the material area fraction is at least 40%.

10. Metal substrate according to any of the previous claims, wherein the metal substrate is a blank or a strip.

11. The metal substrate according to any of the previous claims, wherein the metal substrate comprises a metallic coating.

12. A method to obtain a metal substrate according to claim 1-11, comprising the steps of
a. Providing a metal substrate
b. Optionally temper rolling the metal substrate
c. Providing a surface texture as defined in claims 1-11 by a texturing means.

13. A method according to claim 12, wherein the metal substrate comprises a metallic coating.

14. A method according to claim 12 or 13, wherein the texturing means is a textured work roll or a laser.

## Patentansprüche

1. Metallisches Substrat mit einer Oberflächentextur, wobei die Oberflächentextur eine Vielzahl von Vertiefungen umfasst, **dadurch gekennzeichnet, dass** jedes Triplett von am nächsten liegenden benachbarten Vertiefungen durch einen Kreis mit einem Radius r, gemessen vom Rand der Vertiefungen, voneinander beabstandet ist und wobei der arithmetische Mittelradius rₘₑₐₙ höchstens 20 µm beträgt und wobei der Materialflächenanteil mindestens 30 % beträgt.

2. Metallisches Substrat nach Anspruch 1, wobei mindestens 90 % der Kreise zwischen einem Triplett von am nächsten liegenden benachbarten Vertiefungen einen Radius r von höchstens 30 µm aufweisen.

3. Metallisches Substrat nach Anspruch 1 oder 2, wobei die Oberflächentextur deterministisch oder pseudodeterministisch ist.

4. Metallisches Substrat nach einem der vorhergehenden Ansprüche, wobei die Vertiefungen einen Durchmesser in einem Bereich von 25-120 µm aufweisen.

5. Metallisches Substrat nach einem der vorhergehenden Ansprüche, wobei die Vertiefungen eine Tiefe in einem Bereich von 2-12 µm, bevorzugt in einem Bereich von 2-5 µm, aufweisen.

6. Metallisches Substrat nach einem der vorhergehenden Ansprüche, wobei die Vertiefungen eine Dichte in einem Bereich zwischen 100 und 10000 pro Quadratmillimeter, bevorzugt 180 bis 600 pro Quadrat-mm, aufweisen.

7. Metallisches Substrat nach einem der vorhergehenden Ansprüche, wobei der Wsa ≤ 0,3 µm beträgt, gemessen gemäß SEP1941.

8. Metallisches Substrat nach einem der vorhergehenden Ansprüche, wobei die arithmetische Mittelhöhe Ra in einem Bereich von 0,5 µm bis 2 µm liegt, gemessen gemäß ISO 4287 oder EN10091.

9. Metallisches Substrat nach einem der vorhergehenden Ansprüche, wobei der Materialflächenanteil mindestens 40 % beträgt.

10. Metallisches Substrat nach einem der vorhergehenden Ansprüche, wobei das metallische Substrat ein Rohling oder ein Streifen ist.

11. Metallisches Substrat nach einem der vorhergehenden Ansprüche, wobei das metallische Substrat eine Metallbeschichtung umfasst.

12. Verfahren zum Erlangen eines metallischen Substrats nach Anspruch 1-11, umfassend die Schritte
a. Bereitstellen eines metallischen Substrats
b. optional Nachwalzen des metallischen Substrats
c. Bereitstellen einer Oberflächentextur nach der Definition in Anspruch 1-11 durch ein Texturierungsmittel.

13. Verfahren nach Anspruch 12, wobei das metallische Substrat eine Metallbeschichtung umfasst.

14. Verfahren nach Anspruch 12 oder 13, wobei es sich bei dem Texturierungsmittel um eine texturierte Arbeitswalze oder einen Laser handelt.

## Revendications

1. Substrat métallique avec une texture de surface, dans lequel la texture de surface comprend une pluralité de creux, **caractérisé en ce que** chaque triplet de creux voisins les plus proches est espacé par un cercle avec un rayon r, mesuré à partir du bord des creux, et dans lequel le rayon moyen arithmétique r_{moyen} est inférieur ou égal à 20 µm et dans lequel la fraction de surface de matériau est supérieur ou égal à 30 %.

2. Substrat métallique selon la revendication 1, dans lequel au moins 90 % des cercles entre un triplet de creux voisins les plus proches comportent un rayon r inférieur ou égal à 30 µm.

3. Substrat métallique selon la revendication 1 ou 2, dans lequel la texture de surface est déterministe ou pseudo-déterministe.

4. Substrat métallique selon l'une quelconque des revendications précédentes, dans lequel les creux comportent un diamètre compris dans une plage de 25-120 µm.

5. Substrat métallique selon l'une quelconque des revendications précédentes, dans lequel les creux comportent une profondeur comprise dans une plage de 2-12 µm, de préférence dans une plage de 2-5 µm.

6. Substrat métallique selon l'une quelconque des revendications précédentes, dans lequel les creux comportent une densité comprise dans une plage entre 100 et 10000 par millimètre carré, de préférence entre 180 et 600 par millimètre carré.

7. Substrat métallique selon l'une quelconque des revendications précédentes, dans lequel le Wsa est ≤ 0,3 µm mesuré selon SEP1941.

8. Substrat métallique selon l'une quelconque des revendications précédentes, dans lequel la hauteur moyenne arithmétique Ra est comprise dans une plage de 0,5 µm à 2 µm mesurée selon la norme ISO 4287 ou EN10091.

9. Substrat métallique selon l'une quelconque des revendications précédentes, dans lequel la fraction de surface de matériau est supérieure ou égale à 40 %.

10. Substrat métallique selon l'une quelconque des revendications précédentes, dans lequel le substrat métallique est une ébauche ou une bande.

11. Substrat métallique selon l'une quelconque des revendications précédentes, dans lequel le substrat métallique comprend un revêtement métallique.

12. Procédé pour obtenir un substrat métallique selon la revendication 1-11, comprenant les étapes de
a. fourniture d'un substrat métallique
b. éventuellement, dressage par laminage à froid du substrat métallique
c. fourniture d'une texture de surface telle que définie dans les revendications 1-11 par un moyen de texturation.

13. Procédé selon la revendication 12, dans lequel le substrat métallique comprend un revêtement métallique.

14. Procédé selon la revendication 12 ou 13, dans lequel le moyen de texturation est un cylindre de travail texturé ou un laser.
